# EUROPEAN PATENT APPLICATION

(11) **EP 3 280 146 A1**
(43) Date of publication of application: **07.02.2018**
(21) Application number: 16182873.6
(22) Date of filing: 04.08.2016
(51) Int. Cl.: H04N 21/00, G06F 21/16, H04N 21/8358, H04N 21/439, H04L 9/08

(54) **TRAITOR TRACING**

(71) Applicant: Nagravision SA, 1033 Cheseaux-sur-Lausanne (CH)
(72) Inventor: STUDER, Emeric, 1033 Cheseaux-sur-Lausanne (CH); SARDA, Pierre, 1033 Cheseaux-sur-Lausanne (CH)
(74) Representative: Korenberg, Alexander Tal

(57) **Abstract**

The present disclosure provides a system for and method of traitor tracing. A media stream that has been re-transmitted is identified by assigning a content item, such as an advert, to each of a subset of receivers. The content item can then be used to determine the subset comprising an original receiver of the media stream.

## Description

### FIELD

The present disclosure relates to a system and method of identifying an original receiver of a media stream, for example, when the re-transmitted media stream has been re-transmitted by an original receiver without authorisation.

### BACKGROUND

Audio and/or video content can be transmitted e.g. multicast or webcast etc., from a content provider in a media stream to receivers that receive the media stream. For example, a radio program or television program may be multicast in a media stream to a receiver. Typically, the receivers are authorised to receive the media stream. However, some receivers re-transmit the media stream when they are not authorised to do so, leading to a pirate copy of the media stream being distributed. The pirate version of the media stream can then be received by unauthorised receivers. The pirate media stream is generally re-transmitted in real time, or with a short delay from when the media stream was originally received by the authorised receiver.

Generally, content providers seek to prevent unauthorised receivers from receiving the pirate media stream. This can be achieved by traitor tracing identifying the original receiver of the media stream, and then preventing that receiver from receiving further media streams.

### BRIEF DESCRIPTION OF THE DRAWINGS

Exemplary embodiments of the disclosure shall now be described with reference to the drawings in which:
Figure 1A illustrates an environment in which re-transmission of a media stream is taking place;
Figure 1B illustrates an alternative environment in which re-transmission of a broadcast media stream is taking place;
Figure 2 illustrates a system for transmitting media streams;
Figure 3 illustrates a system for identifying re-transmitted media streams;
Figure 4 illustrates a system for receiving media streams;
Figure 5 illustrates a flow chart of a method of identifying an original receiver of a media stream;
Figure 6A illustrates an example data flow in the method of Figure 4;
Figure 6B illustrates an example data flow in the method of Figure 4;
Figure 6C illustrates an example data flow in the method of Figure 4;
Figure 7 shows a schematic diagram illustrating identification of a re-transmitted video stream; and
Figure 8 illustrates a block diagram of one implementation of a computing device.

### DETAILED DESCRIPTION OF THE DRAWINGS

In overview, a system for and method of traitor tracing is disclosed. A media stream that has been re-transmitted is identified by identifying a content item, such as an advert, that is transmitted in one of a subset of receivers. The content item can then be used to determine the subset comprising an original receiver of the media stream.

In some aspects of the disclosure a method of identifying an original receiver of a media stream comprises splitting a set of receivers into subsets of receivers and associating a respective content item with the receivers in each subset. The media stream is transmitted by a content provider to the original receiver, and the set comprises the original receiver. The method comprises causing insertion, in the media stream, of the respective content item for each subset of receivers, identifying the respective content item in a re-transmitted media stream, and identifying the subset associated with the identified content item. The re-transmitted media stream is a re-transmission of the media stream. Then the identified subset of receivers is split into further subsets of receivers and a further respective content item is associated with the receivers of each further subset. The method comprises causing insertion, in the media stream, of the further respective content item for each further subset of receivers, identifying the further respective content item in the re-transmitted media stream, and identifying the further subset of receivers associated with the identified further respective content item.

It will be understood that reference to a content item or a further content item includes, but is not limited to, a reference to a plurality of content items or further content items, as the case may be. For example, additional content items may be associated with the subset or further subset of receivers and caused to be inserted at each iteration and may be used for identification, and/or a content item or further content item may comprise one or more component content items, for example a concatenation of component content items.

In some embodiments, an individual media stream is transmitted to each receiver with the corresponding content item embedded by the content provider prior to transmission. Accordingly, causing insertion of the respective content item and the further respective content item may comprise inserting, in respective media streams for each receiver, the respective content item or further respective content item associated with the subset of the receiver. The respective media streams may then be transmitted to the receivers.

In some embodiments, an individual media stream is transmitted to each receiver with metadata indicating the corresponding content item to be inserted into the media stream by the receiver. The metadata may comprise an identification of each content item, for example, a server location to access to the item, or specific content item name for the receiver to retrieve the content item from local storage, when the receiver downloads the content items in advance of receiving the media stream, and the position (or time slot) of the content item to cause the receiver to insert the content items into the media streams. Accordingly, causing insertion of the respective content item and the further respective content item may comprise transmitting, in respective media streams for each receiver, metadata indicating the respective content item or further respective content item to be inserted at the receiver. The indicated respective content item or further respective content item may be inserted into the media stream at the receivers using the metadata.

In some embodiments, the media stream is broadcast to the receivers with metadata indicating the content item associated with each subset of receivers. As the media stream is broadcast, the metadata is the same for all receivers. The metadata may comprise an identification of each content item, for example, a server location to access to the item, or specific content item name for the receiver to retrieve the content item from local storage, when the receiver downloads the content items in advance of receiving the media stream, and the position (or time slot) of the content item to cause the receiver to insert the content items into the media streams. Respective identifications and/or positions may be specified for each receiver by associating the respective identifications and/or positions with a receiver identifier enabling the intended receiver to retrieve the relevant content item. For example, in a conditional access system (CAS), the identifications and/or positions may be provided as part of an entitlement management message (EMM) or, more generally, a similar kind of message. Accordingly, causing insertion of the respective content item and the further respective content item may comprise transmitting in the media stream metadata indicating the respective content items or further respective content items, and their association with the receivers in each subset. The respective content item or further respective content item associated with each receiver may be inserted into the media stream at the receivers.

In some embodiments, the media stream is broadcast to the receivers with no indication of the content item to be inserted, for example, the metadata may provide time slot information but not an identification of any content item for the time slot(s). The receiver may request the corresponding content item, or information identifying the content item, to be inserted for each time slot, the request including information identifying the receiver making the request. The content item may then be retrieved from a server location or from a local storage of a receiver, when the receiver downloads the content items in advance of receiving the media stream. Accordingly, causing insertion of the respective content item and the further respective content item may comprise transmitting the media stream, and receiving a request from a receiver for the respective content item or further respective content item associated with the receiver to be inserted into the media stream. The request may comprise an identifier of the receiver.

By identifying media streams based on assigned content items rather than, for example, modifying the main content of the media stream (in which the content items are inserted), a simple method of traitor tracing is provided that uses less processing power compared to a traitor tracing method where a unique identifier for each receiver is embedded into the media stream. For example, when a watermark is added to a video component of the media stream with a unique identifier corresponding to each receiver, this requires the content of the media stream to be modified, either before transmission by a content provider, or by a receiving device. This modification of the media stream requires significant processing power, especially if there are thousands of receivers that need to be identified. Further, simple watermarking can be removed on re-transmission by cropping the video frames in the media stream. Removal of the or all content items to remove identifying information from the media stream is much more difficult for a traitor if the media stream is re-transmitted in real time or near real time. Thus, the disclosed method may be more efficient (for example in that both inserting and detecting content items is relatively simple) but also more effective (for example in that it does not impact the video quality of what the user wants to watch).

Further, by assigning a respective further content item in each of a subset of the identified subset of receivers, receivers other than those in the identified subset can be ruled out as comprising the re-transmitting receiver stream, and so are excluded from further consideration. This provides the content provider with the ability to freely select content items for the receivers other than those in the identified subset.

By repeating the splitting, assigning and identifying, the further subsets become successively smaller until a desired size of subset is reached, for example until an individual receiver is identified, i.e. the size of the subset is equal to one receiver. By identifying the original receiver and/or a corresponding subscriber to the main content, appropriate counter-measures can be taken.

Identifying the respective content items and/or further respective content items may, in some embodiments, comprise receiving information identifying the respective content item or respective further content item. The information may comprise an identifier identifying the content item, a fingerprint of video and/or acoustic content of the content item, the content item itself, a portion of the content item, or any other information allowing identification of the content item. For example, a fingerprint as used in Automatic Content Recognition technologies may be used, and may comprise a condensed digital summary of at least a part of the content item, deterministically generated from an audio/video component of the content item.

Further aspects of the disclosure relate to a system for carrying out the method described above.

Some specific embodiments are now described by way of illustration with reference to the accompanying drawings in which like reference numerals refer to like features.

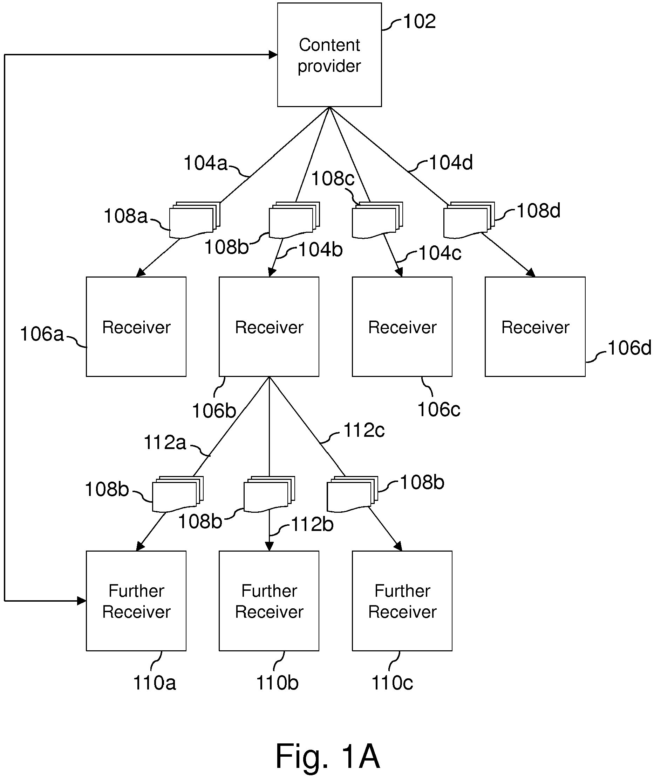

With reference to Figure 1A, a content provider 102 transmits a media stream 104a, 104b, 104c, 104d to each of a plurality of authorised receiver 106a, 106b, 106c, 106d. The media stream is transmitted such that a content provider provides a different media stream 104a-d directly to each receiver 106a-d. The content provider 102, for example a head-end or over the top media server, transmits the media streams 104a-d to the receivers via respective communication channels. For example, each media stream may be transmitted to its receiver via an internet protocol connection such as TCP/IP. The receivers may be arranged to output the media stream to a screen and/or speakers for consumption by a user of the authorised receiver. The authorised receivers 106a-d are authorised by the content provider to receive their respective media stream. The content provider 102 may authorise the receiver using a logged-in user account, a pre-authorised device issued by the content provider, and/or a smart card for the receiver, e.g. a set-top box smart card. Accordingly, the authorised receivers 106a-d are a defined set of devices that are at least temporarily registered with the content provider 102 to receive content.

Each media stream 104a-d comprises the same main content and a different set of content items 108a, 108b, 108c, 108d relative to each other. Each set of content items 108a-d comprises a plurality of content items. Each content item may be an advertisement, a movie trailer, a station identifier such as a TV ident, a news flash, a weather update, etc.

The content items 108a-d may be allocated to time slots in the media streams 104a-d in breaks between the main content of the media stream. Each content item may be of equal length with the benefit that the content items can be easily interchanged between time slots. The main content may be a radio show, a television programme, a sports match, a movie, etc.

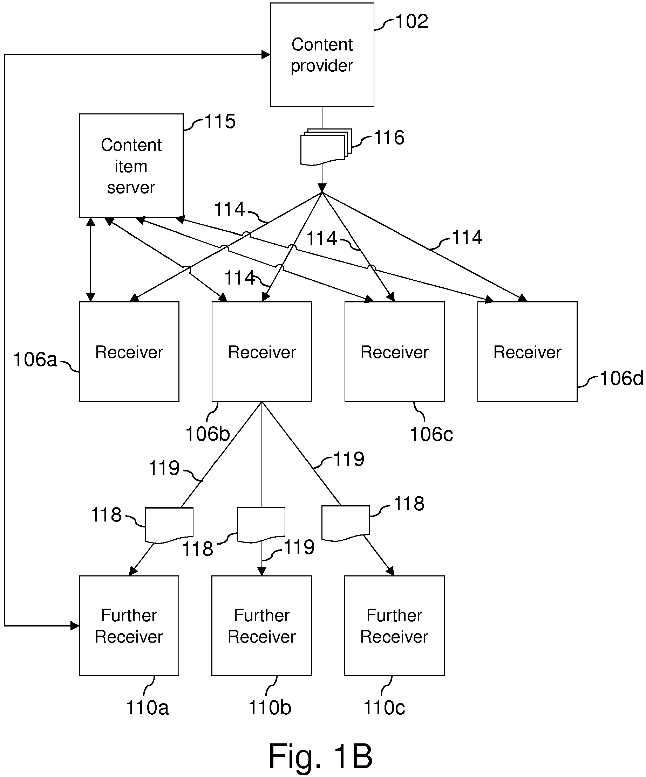

Figure 1A, as described above, relates to point-to-point communication channels. In some embodiments, the content provider 102 instead broadcasts a media stream to receivers. In this setting, now described with reference to Figure 1B, as each receiver receives the same media stream, the individualised content items cannot be embedded before transmission of the media stream because the same media stream is received by all receivers. Instead the content items are embedded by the receiver before the media stream is output, e.g. decoded and displayed, as described below.

With reference to Figure 1B, the content provider 102 broadcasts a media stream 114, and it is received by a plurality of authorised receivers 106a, 106b, 106c, 106d, each having a receiver identifier, for example a unique ID of the receiver, a unique ID of a peripheral such as a smart card associated with the receiver, or a logged-in subscriber ID. The media stream 114 comprises the main content and metadata 116 indicating different sets of content items and their time slots for each receiver 106a-d.

For example, the metadata may comprise a list of individual receiver identifiers and their corresponding set of content items, or the metadata may define a set of content items for a range of receiver identifiers, e.g. receiver identifier numbers 1 to 10,000, 10,001 to 20,000 etc. Each receiver 106a-d is arranged to read the metadata and insert the set of content items corresponding to its receiver identifier into a media stream for output. For example, receiver 106b is instructed by the metadata 116 to output the media stream with a set of content items 118.

A content item server 115 stores a collection of content items that can be inserted into media streams for retrieval by the receivers 106a-d. The receivers 106a-d may comprise a memory for storing content items retrieved from the content item server 115. Alternatively or additionally, the receivers 106a-d may retrieve a content item indicated in the metadata from the content item server 115 at the time of inserting into a media stream. The receivers may retrieve only the content items required for insertion, or may download and store a larger set of content items to select from locally.

In some embodiments, the metadata indicates a time slot for a content item but does not specify the content item to be inserted. Instead, the receivers 106a-d request a content item for each time slot by transmitting the receiver identifier to the content item server 115 and a content item is selected and transmitted by the content item server 115 based on the receiver identifier. The identifier may be a Media Access Control (MAC) address, an Internet Protocol (IP) address of the network connection used by the receiver, a serial number/code, a CAS Unique identifier, or any other identifier.

It will be understood that metadata can be inserted in the respective media streams instead of the set of content items in embodiments where the content provider 102 transmits the media streams as described with reference to Figure 1A. The receivers 106a-d may read the metadata and output the media stream with the indicated set of content items embedded. Since individualised respective media streams are transmitted, the metadata may be different for each receiver. Of course, the metadata may be the same for all receivers but indicate different sets of content items for each receiver, e.g. identified by an identifier of the receiver or subscriber, as described with reference to Figure 1B.

In the embodiments of both Figures 1A and 1B, one of the authorised original receivers 106b (referred to as the re-transmitting receiver 106b below) re-transmits its media stream 104b, 114 to further receivers 110a, 110b, 110c in re-transmitted media streams 112a, 112b, 112c, 119 ,i.e. pirate transmissions of the media stream. The re-transmitting receiver 106b is not authorised by the content provider 102 to re-transmit the media stream, and the further receivers may not be authorised by the content provider to receive the media stream. Accordingly, the further receivers 110a-c are an open set of devices unknown to the content provider 102. It will be understood that the re-transmitted media stream may not be received directly from the re-transmitting receiver 106b or any one of the authorised receivers. Instead, the re-transmitted media stream may be received from a source that is sent a media stream from one of the authorised receivers, and it will be understood that the principles of the present disclosure equally apply to this situation.

The re-transmitted media streams 112a-c, 119 may be in a different data format to the original media stream received by the re-transmitting receiver. For example, the re-transmitted media stream may have a lower data rate or use different audio or video codecs than the original media stream received by the re-transmitting receiver. The re-transmitted media stream 112a-c, 119 may even be modified, e.g. a video portion may be cropped, to circumvent any watermarking apply to the media stream, without affecting the principle of the present disclosure.

In the setting of Figure 1A, the re-transmitted media streams 112a-c each comprise the same set of content items 108b as received by the re-transmitting receiver 106b because the re-transmitted media streams 202a-c are versions of the media stream 104b received by the re-transmitting receiver 106b. Therefore, as each of the media streams transmitted to the authorised receivers comprise different sets of content items 108a-d, traitor tracing can be carried out to identify the original receiver of the media stream 104b that was re-transmitted by inspecting the set of content items in any of the re-transmitted media streams 202a-c. The re-transmitting receiver 106b may then be identified as the original receiver of the media stream 104b that was re-transmitted.

Similarly, in the setting of Figure 1B, the re-transmitted media streams 119 each comprise the same set of content items 118 as indicated in the metadata 116 for the receiver 106b and inserted at the receiver 106b. Therefore, as each of the media streams output by the authorised receivers comprise different sets of content items as indicated by the metadata 116, traitor tracing can be carried out to identify the re-transmitted receiver 106b by inspecting the set of content items in any of the re-transmitted media streams 119, as described above.

In both the settings of Figures 1A and 1B, one of the further receivers 110a (referred to as the identifying receiver 110a below) is arranged to identify the original receiver of the media stream that is being re-transmitted in order to determine the re-transmitting receiver, or to supply information to the content provider 102 that enables the identification as described below. The content provider 102 and the identifying receiver 110a are communicatively coupled, for example by a network connection so that the content provider 102 can receive information related to the identity of the original receiver.

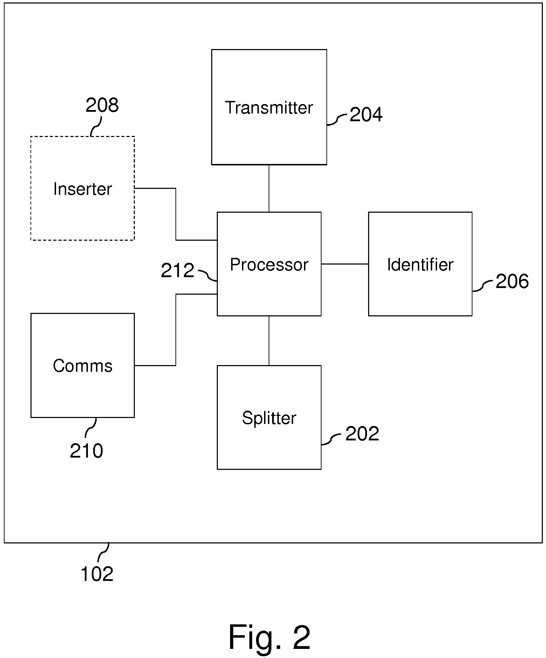

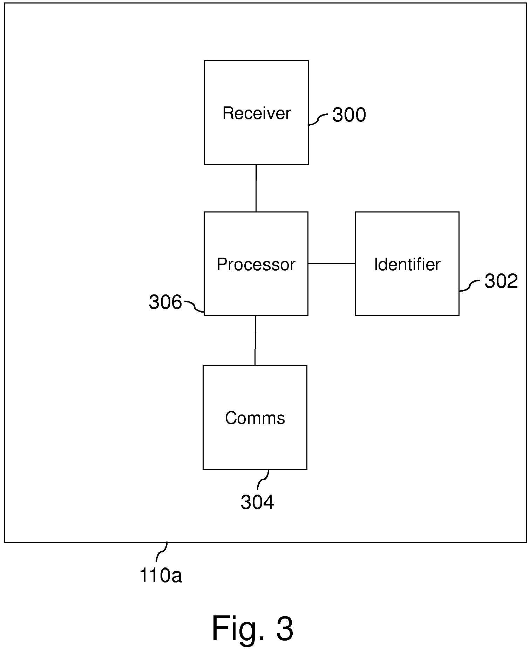

The content provider 102 and the identifying receiver 110a will now be described in greater detail with reference to Figures 2 and 3 respectively.

With reference to Figure 2, the content provider 102, in some embodiments, comprises a splitter module 202, a transmitter module 204, an identifying module 206, a communications module 210, and a processor 212. In some embodiments, the content provider 102 comprises an insertion module 208. It will be understood that these modules can be provided in hardware or software, or a combination thereof, and can be provided in a single device or a distributed system, as described in detail below.

The splitter module 202 is configured to split receivers into subsets and assign the same content item to receivers within the same subset. The insertion module 208 is configured to insert content items into media streams. The identifying module 206 is configured to analyse the received media stream to identify content items and/or information associated with content items in the received media stream. In some embodiments, the identifying module 206 is arranged to receive information associated with content items from the identifying receiver 110a in order to identify the content item. The transmitter module 204 is arranged to transmit media streams to authorised receivers 106a-d.

The communications module 210 is configured to communicate with the identifying receiver 110a. The processor 212 is configured to coordinate between the modules and process the result of identification, e.g. to raise a traitor alarm such as by generating an email alert, suspend an account corresponding to the identified media stream or take any other suitable action to deal with the breach of content rights.

With reference to Figure 3, the identifying receiver 110a comprises a receiver module 300, an identifying module 302, a communications module 304, and a processor 306. It will be understood that these modules can be provided in hardware or software, or a combination thereof, and can be provided in a single device or a distributed system, as described in detail below.

The receiver module 302 is configured to receive the re-transmitted media stream 202a, the identifying module 302 is configured to analyse the received media stream to identify content items and/or information associated with content items in the received media stream. The communications module 304 is configured to communicate with the content provider 102. The processor 306 is configured to coordinate between the modules. Further, the processor 306 is configured to cause the receiver module 300 to access and receive different media streams, for example for suspected websites or internet links so that the identifying receiver 110a can scan for pirate media streams.

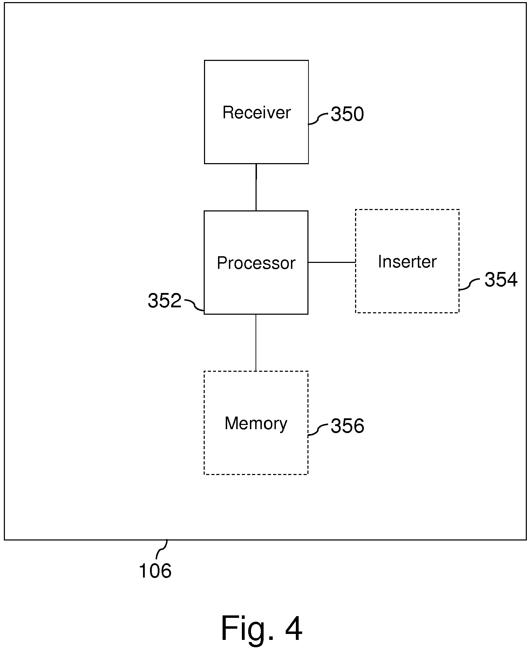

With reference to Figure 4, the receivers 106a-d each comprise a receiver module 350, and a processor 352. In some embodiments, the receivers also comprise an inserter module 354 and/or a memory 356. It will be understood that these modules can be provided in hardware or software, or a combination thereof, and can be provided in a single device or a distributed system, as described in detail below. The receiver module 350 is configured to receive the media stream 104a-d, 114. The memory 356 may store content items. The insertion module 354 is configured to insert content items into media streams, either from a remote source or from the memory 356, as described above. The processor 352 is configured to coordinate between the modules. Processor 352 or insertion module 354 may be arranged to buffer and delay the main content by a sufficient length of time to enable the necessary management of the metadata, and the correct insertion of the content items at the appropriate position in the media stream.

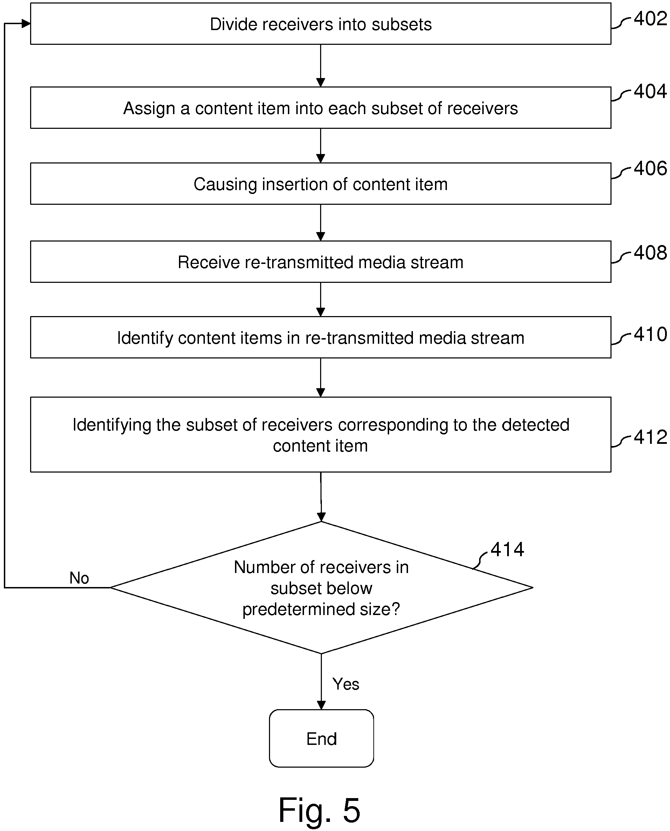

A method of identifying an original receiver of a media stream is now described with reference to Figure 5. At step 402, the splitter module 202 of the content provider 102 splits a set of all the receivers into different subsets, each subset having substantially equal number of receivers. In other embodiments, the number of receivers in each subset may differ.

At step 404, for each subset, the same content item is assigned to each receiver in the subset by the splitter module 202 of the content provider 102 such that every receiver in a subset is assigned the same content item. The content items may be embedded in the media streams in time slots determined by the insertion module 208 of the content provider 102. Assigning a content item to a media stream may include the insertion module 208 of the content provider 102 inserting the content item into each media stream. A master media stream for each subset may comprise the same main content, and the assigned content item, or metadata indicating the assigned content item, may instead be inserted into the master media stream to form the media stream(s) to be transmitted or broadcast to the receivers in the subset.

At step 406, insertion of the content item into the media stream is caused. The insertion may be carried out by the content provider 102 or at the receivers 106a-d. For example, the content provider 102 may provide information, i.e. metadata, to the receivers 106a-d that causes the insertion modules 354 of the receivers 106a-d to insert the respective content item for the receivers in the subset, as described above.

In embodiments where respective media streams 104a-d are transmitted to the receivers, at step 406, the respective content item (or metadata indicating the respective content item) is inserted into the respective media stream by the content provider 102, and the media streams are transmitted to their respective receiver by the transmitter module 204 of the content provider.

In embodiments where the media stream 114 is broadcast, at step 406, the media stream is transmitted with metadata 116 defining the content item determined for each subset. The receivers 106a-d then read the metadata and insert the content item corresponding to their receiver identifier in the metadata into the media stream to be output, as described above.

At step 408, a re-transmitted media stream from the re-transmitting receiver is received by the receiver module 300 of the identifying receiver 110a. In other embodiments, the re-transmitted media stream is not received directly from the re-transmitting receiver 106b or one of the original receivers, instead the re-transmitted media stream is received from a source that is sent a media stream from one of the authorised receivers.

At step 410, the content item embedded in the received re-transmitted media stream is detected either by the identifying module 206 of the content provider 102 or by the identifying module 302 of the identifying receiver 110a as described below. The detection of the content item may be carried out using automatic content recognition as is known in the art to recognise and identify the content item present in the media stream. For example, an audio fingerprint of a portion of the media stream may be generated and compared against the audio fingerprints of the assigned content items in order to determine a matching content item.

At step 412, the subset of receivers that comprise the detected content item is identified to determine the subset that was assigned the detected content item.

At step 414, the processor 212 of the content provider checks if the number of receivers in the identified subset from step 412 is below a predetermined size, then the process ends. On the other hand, if the number of receivers in the identified subset from step 412 is greater than a predetermined size, then the process loops back to step 402 to divide the identified subset into further subsets of receivers. In this way, the process continues until the number of receivers in the identified subset is reduced to below the predetermined size. For example, the predetermined size of the subset may be one receiver in order to uniquely identify the traitor.

Following step 412, receivers in subsets other than the identified subset are determined not to comprise the re-transmitting receiver 106b, and so are excluded from further consideration in iterations of the process of Figure 5. This provides the content provider 102 with the ability to freely select content items for the receivers in subsets other than the identified subset.

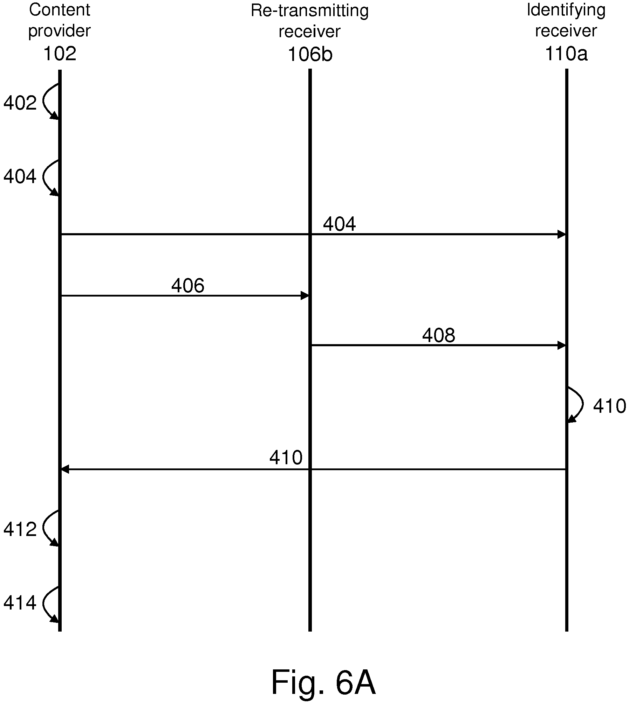

With reference to Figure 6A, an example data flow between the content provider 102, the re-transmitting receiver 106b and the identifying receiver 110a, in a particular embodiment, is now discussed. The content provider 102 splits the receivers into subsets (step 402 in Figure 5) and assigns the same content item to each subset (step 404). Further, step 404 comprises the content provider 102 communicating to the identifying receiver 110a information associated with the content items. For example, information associated with the content items may be a list of the content items assigned to an upcoming time slot such that the list is received by the identifying receiver 110a before the upcoming time slot. In some embodiments, the information associated with the content items may comprise acoustic and/or video fingerprints of the assigned content items, at least a portion of the content items themselves, or an identifier identifying the content items of fingerprints in a database for retrieval by the identifying module 302 of the identifying receiver 110a.

In embodiments where respective media streams 104a-d are transmitted to the receivers, at step 406, the insertion module 208 of the content provider 102 inserts the respective content item (or metadata indicating the respective content item), and the transmitter module 204 transmits the media streams comprising the assigned content items (or metadata indicating the assigned content items) to their respective authorised receivers 106a-d (including the re-transmitting receiver 106b). In embodiments where the media stream 114 is broadcast, at step 406, the transmitter module 204 of the content provider 102 transmits the media stream with metadata 116 defining the content item determined for each subset. The receivers 106a-d then read the metadata and insert the content item corresponding to their receiver identifier in the metadata into the media stream to be output. The re-transmitting receiver 106b re-transmits its media stream 104b and the receiver module 302 of the identifying receiver 110a receives the re-transmitted media stream at step 408.

At step 410, the identifying module 302 of the identifying receiver 110a identifies the content item using the information received at step 404, and communicates which content item was identified to the content provider 102, for example, by sending a content item identifier to the content provider 102 via the respective communications modules 210, 304 of the identifying receiver 110a and the content provider 102.

The identifying module 206 of the content provider 102 identifies at step 412 to which subset the detected content item was assigned. The processor 212 of the content provider 102 checks at step 414 whether the size of the subsets is below the predetermined size, and if not, then the content provider loops back to step 402 and splits the identified subset into further subsets. The steps 402 to 414 are repeated to reduce the size of the further subsets until a predetermined size of the further subset is reached, as described above.

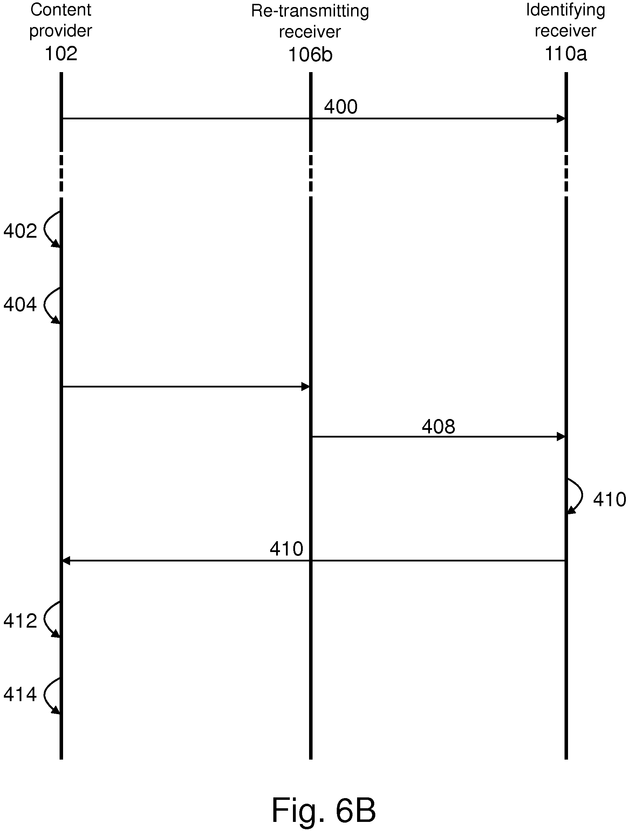

With reference to Figure 6B, a different example data flow between the content provider 102, the re-transmitting receiver 106b and the identifying receiver 110a in a particular embodiment is now discussed. The data flow is similar to the data flow described with reference to Figure 6A above. However, instead of communicating to the identifying receiver 110a information associated with only the upcoming content items at step 404, information, such as fingerprints as described above, associated with all available content items is sent at step 400, prior to step 402. In other words, information that can be used to identify each of the possible content items is sent to the identifying receiver 110a in advance of commencing the method of identifying an original receiver of a media stream described with reference to Figure 5.

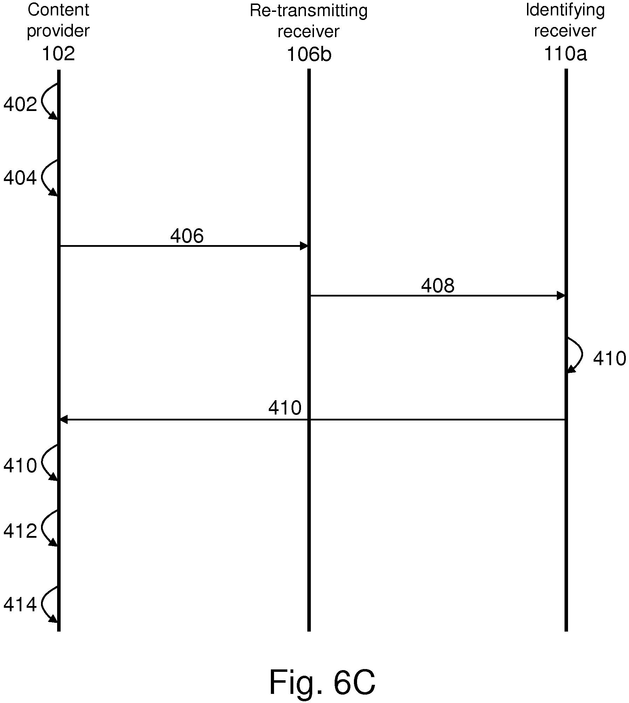

With reference to Figure 6C, an example data flow between the content provider 102, the re-transmitting receiver 106b and the identifying receiver 110a in a further particular embodiment is now discussed. The data flow is similar to the data flow described with reference to Figure 6A above, in which the identification of the content item in the re-transmitted media stream is carried out by the content provider 102. The content provider 102 does not communicate information associated with the assigned content items to the identifying receiver 110a at step 404. Instead, at step 410, the identifying receiver 110a determines information identifying the content item (e.g. a watermark, an acoustic and/or video fingerprint etc.) and communicates this identifying information to the content provider 102. The content provider 102 then uses the information identifying the content item to identify the content item from the assigned content items. In other embodiments, at step 410, the identifying receiver 110a extracts the content item, or a portion of the content item, from the re-transmitted media stream and communicates this to the content provider 102 so that the content provider 102 can identify the content item.

It will be understood that many other data flows are equally possible, for example, the content provider 102 could, in the examples of Figures 6A and 6B, send information about the media streams and associated user accounts to the identifying receiver 110a for processing and raising of alerts (e.g. email or other alerts to the content provider 102) by the identifying receiver 110a.

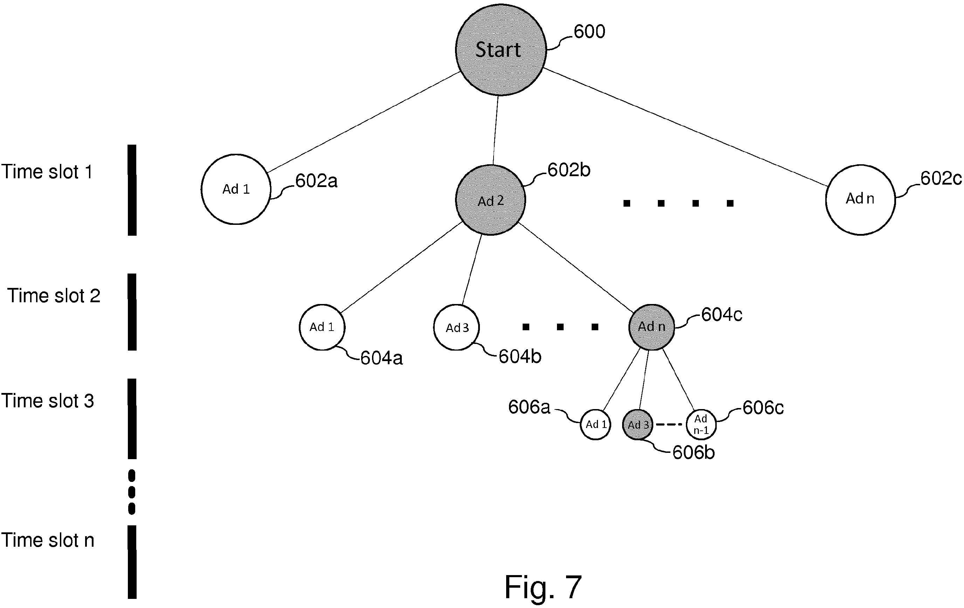

In the setting of the embodiment of Figure 1A where respective media streams are transmitted to each receiver 106a-d, an example assignment of content items to subsets is discussed with reference to Figure 7. All receivers in a set 600 initially comprise the same content, i.e. main content and content items. The set 600 is split (at step 402) into a plurality of subsets 602a, 602b, 602c, where each subset comprises different receivers. The subsets 602a-c are each assigned a different content item (at step 404) to a time slot of the media streams. The media streams are transmitted (at step 406) to the receivers. For example, content item 'Ad1' is embedded in the media streams for the receivers in subset 602a, content item 'Ad2' is embedded in the media streams for the receivers in subset 602b, and content item 'Adn' is embedded in the media streams for the receivers in subset 602c.

The identifying receiver 110a receives (at step 408) the re-transmitted media stream, and detects (at step 410) that the re-transmitted media stream comprises content item 'Ad2'. Therefore, the identifying receiver 110a identifies (at step 412) subset 302b as comprising the re-transmitting receiver 106b. The subset 602b comprises more receivers than the predetermined number of receivers, and so subset 602b is split into further subsets 604a, 604b, 604c, where each subset comprises different receivers.

The further subsets 604a-c are each assigned a different content item (at step 404) to a time slot of the media streams. The media streams are transmitted (at step 406) to the receivers. For example, content item 'Ad1' is embedded and transmitted to the receivers in further subset 604a, content item 'Ad3' is embedded and transmitted to the receivers in subset 604b, and content item 'Adn' is embedded and transmitted to the receivers in subset 604c.

The identifying receiver 110a continues to receive (at step 408) the re-transmitted media stream, and detects (at step 410) that the re-transmitted media stream comprises content item 'Adn'. Therefore, the identifying receiver 110a identifies (at step 412) subset 604c as comprising the re-transmitting receiver 106b. The subset 604c comprises more receivers than the predetermined number of receivers, and so subset 604c is split into further subsets 606a, 606b, 606c, where each subset comprises different receivers.

The further subsets 606a-c are each assigned a different content item (at step 404) to a time slot of the media streams. The media streams are transmitted (at step 406) to the receivers. For example, content item 'Ad1' is embedded and transmitted to the receivers in further subset 606a, content item 'Ad3' is embedded and transmitted to the receivers in subset 606b, and content item 'And-1' is embedded and transmitted to the receivers in subset 606c.

The identifying receiver 110a continues to receive (at step 408) the re-transmitted media stream, and detects (at step 410) that the re-transmitted media stream comprises content item 'Ad3'. Therefore, the identifying receiver 110a identifies (at step 412) subset 606b as comprising the re-transmitting receiver 106b. The subset 606b comprises fewer receivers than the predetermined number of receivers, and so a desired size of subset comprising the re-transmitting receiver 106b has been identified.

It is to be understood that in the setting of the embodiment of Figure 1B where the media stream is broadcast to the receivers 106a-d, the assignment of content items described with reference to Figure 7 may involve metadata indicating the content item being embedded into the media stream instead of the content item itself. For example, metadata is embedded in the media stream for 'timeslot 1' indicating content item 'Ad1' for the receivers in subset 602a, content item 'Ad2' for the receivers in subset 602b, and content item 'Adn' for the receivers in subset 602c. The receivers then insert the content item corresponding to their subset 602a-c.

Embodiments have been described in which content items are caused to be inserted in main content in respect of subgroups of receivers based on feedback about content item(s) present in a retransmitted media stream, in order to narrow down or identify the source of the re-transmission, i.e. the re-transmitting receiver 106. The described embodiments insert content items in specified slots in the main content. The slots may be pre-determined or created locally at the receiver. Equally, the feedback methodology that has been described above is not only applicable in relation to content items, but also any other marker suitable for identifying a subgroup of receivers that can be inserted, at the head end or receiver as described above for content items.

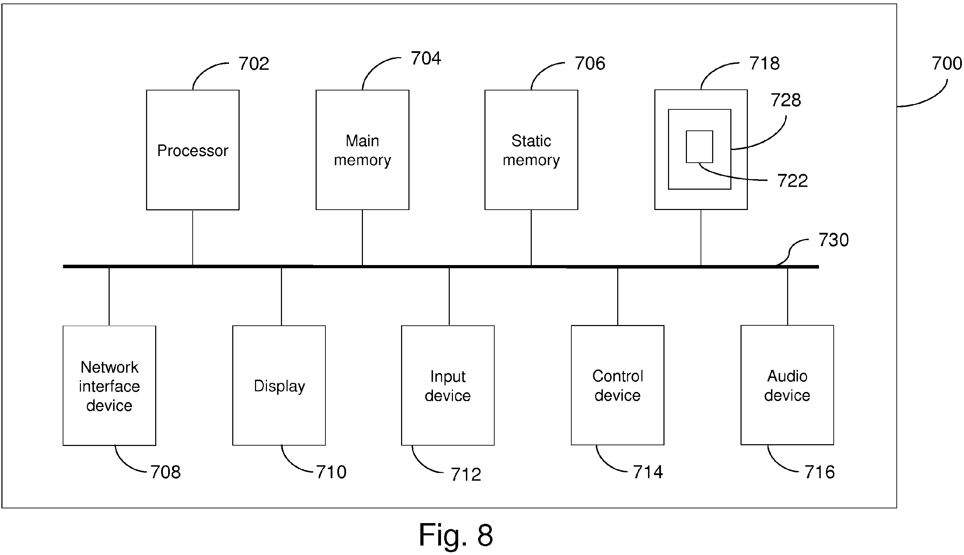

Figure 8 illustrates a block diagram of one implementation of a computing device 700 within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 700 includes a processing device 702, a main memory 704 (e.g., read-only memory (ROM), flash memory, dynamic random access memory (DRAM) such as synchronous DRAM (SDRAM) or Rambus DRAM (RDRAM), etc.), a static memory 706 (e.g., flash memory, static random access memory (SRAM), etc.), and a secondary memory (e.g., a data storage device 718), which communicate with each other via a bus 730.

Processing device 702 represents one or more general-purpose processors such as a microprocessor, central processing unit, or the like. More particularly, the processing device 702 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 702 may also be one or more special-purpose processing devices such as an application specific integrated circuit (ASIC), a field programmable gate array (FPGA), a digital signal processor (DSP), network processor, or the like. Processing device 702 is configured to execute the processing logic (instructions 722) for performing the operations and steps discussed herein.

The computing device 700 may further include a network interface device 708. The computing device 700 also may include a video display unit 710 (e.g., a liquid crystal display (LCD) or a cathode ray tube (CRT)), an alphanumeric input device 712 (e.g., a keyboard or touchscreen), a control device 714 (e.g., a mouse or touchscreen), and an audio device 716 (e.g., a speaker).

The data storage device 718 may include one or more machine-readable storage media (or more specifically one or more non-transitory computer-readable storage media) 728 on which is stored one or more sets of instructions 722 embodying any one or more of the methodologies or functions described herein. The instructions 722 may also reside, completely or at least partially, within the main memory 704 and/or within the processing device 702 during execution thereof by the computer system 700, the main memory 704 and the processing device 702 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein (for example, receiver module 300 or identifier module 302 in relation to Figure 3) can be implemented as discrete components or integrated in the functionality of hardware components such as ASICS, FPGAs, DSPs or similar devices as part of an individualization server.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "determining", "comparing ", "identifying," or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Further aspects and embodiments are disclosed in the following numbered items:
1. A method of identifying an original receiver of a media stream, wherein the media stream is transmitted by a content provider to the original receiver, the method comprising:
   a) splitting a set of receivers into subsets of receivers, wherein the set comprises the original receiver, and associating a respective content item with the receivers in each subset;
   b) causing insertion, in the media stream, of the respective content item for each subset of receivers;
   c) identifying the respective content item in a re-transmitted media stream, wherein the re-transmitted media stream is a re-transmission of the media stream;
   d) identifying the subset of receivers associated with the identified content item;
   e) splitting the identified subset of receivers into further subsets and associating a further respective content item with the receivers in each further subset;
   f) causing insertion, in the media stream, of the further respective content item for each further subset of receivers;
   g) identifying the further respective content item in the re-transmitted media stream; and
   h) identifying the further subset of receivers associated with the identified further respective content item.
2. The method of Item 1, further comprising repeating steps e to h to reduce the size of the identified further subset.
3. The method of Item 2, wherein steps e to h are repeated until the size of the further subset is one receiver.
4. The method of any preceding item, wherein identifying the respective content item in the re-transmitted media stream comprises:
   receiving the re-transmitted media stream; and
   detecting the respective content item in the received re-transmitted media stream.
5. The method of any preceding item, wherein identifying the further respective content item in the re-transmitted media stream comprises:
   continuing to receive the re-transmitted media stream; and
   detecting the further respective content items in the received re-transmitted media stream.
6. The method of any of preceding item, wherein the number of receivers in each subset and/or further subset is substantially equal across the subsets.
7. The method of any preceding item, wherein the content items are one or more of: an advertisement; a movie trailer; a station identifier; a news flash; and a weather update
8. The method of any preceding item, wherein each content item is of equal length, and wherein the media stream comprises predetermined time slots for the content items.
9. The method of any preceding item, wherein the media stream comprises an audio component, and wherein identifying the respective content item and/or the further respective content item comprises comparing an audio fingerprint of the content item in the re-transmitted media stream with predetermined audio fingerprints associated with content items.
10. The method of any preceding item, wherein the media stream comprises a video component, and wherein identifying the respective content item and/or the further respective content item comprises comparing a video fingerprint of the content item in the re-transmitted media stream with predetermined audio fingerprints associated with content items.
11. The method of any preceding item, wherein identifying the respective content item and/or the further respective content item comprises detecting an audio and/or video watermark in the media stream, and comparing the detected watermark with predetermined watermarks associated with content items.
12. The method of any preceding item, wherein identifying the respective content item and/or the further respective content item comprises receiving information identifying the content item.
13. The method of item 12, wherein the information identifying the content item is received over a communication network.
14. The method of any preceding item, wherein causing insertion of the respective content item and the further respective content item comprises:
   inserting, in respective media streams for each receiver, the respective content item or further respective content item associated with the subset of the receiver; and
   transmitting the respective media streams to the receivers.
15. The method of any of items 1 to 14, wherein causing insertion of the respective content item and the further respective content item comprises:
   transmitting, in respective media streams for each receiver, metadata indicating the respective content item or further respective content item to be inserted at the receiver; and
   causing insertion of the indicated respective content item or further respective content item into the media stream at the receivers.
16. The method of any of items 1 to 14, wherein causing insertion of the respective content item and the further respective content item comprises:
   transmitting in the media stream metadata indicating the respective content items or further respective content items, and their association with each subset; and
   causing insertion of the respective content item or further respective content item associated with the receiver into the media stream at the receivers.
17. The method of any of items 1 to 14, wherein causing insertion of the respective content item and the further respective content item comprises:
   transmitting the media stream; and
   receiving a request from a receiver for the respective content item or further respective content item associated with the receiver to be inserted into the media stream, the request comprising an identifier of the receiver.
18. The method of any of items 15 to 17, wherein each receiver comprises a memory, and causing insertion of each content item comprises each receiver retrieving the respective content item or further respective content item from its memory.
19. The method of any of items 15 to 18, wherein causing insertion of each content item comprises each receiver retrieving the respective content item or further respective content item from a remote source.
20. One or more non-transitory computer readable media having computer-executable instructions to cause one or more computer systems to perform the method of any of items 1 to 19.
21. A system for identifying an original receiver of a media stream, wherein the media stream is transmitted by a content provider to the original receiver, the system comprising a processor arranged to:
   a) split a set of receivers into subsets, wherein the set comprises the original receiver, and associate a respective content item with the receivers in each subset;
   b) cause insertion, in the media stream, of the respective content item for each subset of receivers;
   c) identify the respective content item in a re-transmitted media stream, wherein the re-transmitted media stream is a re-transmission of the media stream;
   d) identify the subset of receivers associated with the identified content item;
   e) split the identified subset of receivers into further subsets of receivers and associate a further respective content item with the receivers in each further subset;
   f) cause insertion, in the media stream, of the further respective content item for each further subset of receivers;
   g) identify the further respective content item in the re-transmitted media stream; and
   h) identify the further subset of receivers associated with the identified further respective content item.
22. The system of Item 21, the processor further arranged to repeat steps e to h to reduce the size of the identified further subset.
23. The system of Item 22, wherein steps e to h are repeated until the size of the further subset is one receiver.
24. The system of any of Items 21 to 23, wherein the step of identifying the respective content item in the re-transmitted media stream comprises:
   receiving the re-transmitted media stream; and
   detecting one of the respective content items in the received re-transmitted media stream.
25. The system of any of Items 21 to 24, wherein the step of identifying the further respective content item in the re-transmitted media stream comprises:
   continuing to receive the re-transmitted media stream; and
   detecting one of the respective further content items in the received re-transmitted media stream.
26. The system of any of Items 21 to 25, wherein the number of receivers in each subset and/or further subset is substantially equal across the subsets.
27. The system of any of Items 21 to 26, wherein the content items are one or more of: an advertisement; a movie trailer; a station identifier; a news flash; and a weather update
28. The system of any of Items 21 to 27, wherein each content item is of equal length, and wherein the media stream comprises predetermined time slots for the content items.
29. The system of any of Items 21 to 28, wherein the media stream comprises an audio component, and wherein identifying the respective content item and/or the further respective content item comprises comparing an audio fingerprint of the content item in the re-transmitted media stream with predetermined audio fingerprints associated with content items.
30. The system of any of Items 21 to 29, wherein the media stream comprises a video component, and wherein identifying the respective content item and/or the further respective content item comprises comparing a video fingerprint of the content item in the re-transmitted media stream with predetermined audio fingerprints associated with content items.
31. The system of any of Items 21 to 30, wherein identifying the respective content item and/or the further respective content item comprises detecting a watermark in the media stream, and comparing the detected watermark with predetermined watermarks associated with content items.
32. The system of any of Items 21 to 31, wherein identifying the content item comprises receiving information identifying the content item.
33. The system of Item 32, wherein the information identifying the content item is received over a communication network.
34. The system of any of Items 21 to 33, wherein the processor arranged to cause insertion of the respective content item and the further respective content item is arranged to:
   insert, in respective media streams for each receiver, the respective content item or further respective content item associated with the subset of the receiver; and
   transmit the respective media streams to the receivers.
35. The system of any of Items 21 to 33, wherein the processor arranged to cause insertion of the respective content item and the further respective content item is arranged to:
   transmit, in respective media streams for each receiver, metadata indicating the respective content item or further respective content item to be inserted at the receiver; and
   cause insertion of the indicated respective content item or further respective content item into the media stream at the receivers.
36. The system of any of Items 21 to 33, wherein the processor arranged to cause insertion of the respective content item and the further respective content item is arranged to:
   transmit in the media stream metadata indicating the respective content items or further respective content items, and their association with each subset; and
   cause insertion of the respective content item or further respective content item associated with the receiver into the media stream at the receivers.
37. The system of any of Items 21 to 33, wherein the processor arranged to cause insertion of the respective content item and the further respective content item is arranged to:
   transmit the media stream; and
   receive a request from a receiver for the respective content item or further respective content item associated with the receiver to be inserted into the media stream, the request comprising an identifier of the receiver.
38. The system of any of Items 35 to 37, wherein each receiver comprises a memory, and causing insertion of each content item comprises each receiver retrieving the respective content item or further respective content item from its memory.
39. The system of any of Items 35 to 38, wherein causing insertion of each content item comprises each receiver retrieving the respective content item or further respective content item from a remote source.

## Claims

1. A method of identifying an original receiver of a media stream, wherein the media stream is transmitted by a content provider to the original receiver, the method comprising:
a) splitting a set of receivers into subsets of receivers, wherein the set comprises the original receiver, and associating a respective content item with the receivers in each subset;
b) causing insertion, in the media stream, of the respective content item for each subset of receivers;
c) identifying the respective content item in a re-transmitted media stream, wherein the re-transmitted media stream is a re-transmission of the media stream;
d) identifying the subset of receivers associated with the identified content item;
e) splitting the identified subset of receivers into further subsets and associating a further respective content item with the receivers in each further subset;
f) causing insertion, in the media stream, of the further respective content item for each further subset of receivers;
g) identifying the further respective content item in the re-transmitted media stream; and
h) identifying the further subset of receivers associated with the identified further respective content item.

2. The method of Claim 1, further comprising repeating steps e to h to reduce the size of the identified further subset.

3. The method of Claim 2, wherein steps e to h are repeated until the size of the further subset is one receiver.

4. The method of any preceding claim, wherein identifying the respective content item in the re-transmitted media stream comprises:
receiving the re-transmitted media stream;
detecting the respective content item in the received re-transmitted media stream;
continuing to receive the re-transmitted media stream; and
detecting the further respective content items in the received re-transmitted media stream.

5. The method of any preceding claim, wherein each content item is of equal length, and wherein the media stream comprises predetermined time slots for the content items.

6. The method of any preceding claim, wherein the media stream comprises an audio component, and wherein identifying the respective content item and/or the further respective content item comprises comparing an audio fingerprint of the content item in the re-transmitted media stream with predetermined audio fingerprints associated with content items.

7. The method of any preceding claim, wherein identifying the respective content item and/or the further respective content item comprises receiving information identifying the content item.

8. The method of any preceding claim, wherein causing insertion of the respective content item and the further respective content item comprises:
inserting, in respective media streams for each receiver, the respective content item or further respective content item associated with the subset of the receiver; and
transmitting the respective media streams to the receivers.

9. The method of any of Claims 1 to 7, wherein causing insertion of the respective content item and the further respective content item comprises:
transmitting in the media stream metadata indicating the respective content items or further respective content items, and their association with each subset; and
causing insertion of the respective content item or further respective content item associated with the receiver into the media stream at the receivers.

10. The method of any of Claims 1 to 7, wherein causing insertion of the respective content item and the further respective content item comprises:
transmitting the media stream; and
receiving a request from a receiver for the respective content item or further respective content item associated with the receiver to be inserted into the media stream, the request comprising an identifier of the receiver.

11. One or more non-transitory computer readable media having computer-executable instructions to cause one or more computer systems to perform the method of any of Claims 1 to 10.

12. A system for identifying an original receiver of a media stream, wherein the media stream is transmitted by a content provider to the original receiver, the system comprising a processor arranged to:
a) split a set of receivers into subsets, wherein the set comprises the original receiver, and associate a respective content item with the receivers in each subset;
b) cause insertion, in the media stream, of the respective content item for each subset of receivers;
c) identify the respective content item in a re-transmitted media stream, wherein the re-transmitted media stream is a re-transmission of the media stream;
d) identify the subset of receivers associated with the identified content item;
e) split the identified subset of receivers into further subsets of receivers and associate a further respective content item with the receivers in each further subset;
f) cause insertion, in the media stream, of the further respective content item for each further subset of receivers;
g) identify the further respective content item in the re-transmitted media stream; and
h) identify the further subset of receivers associated with the identified further respective content item.

13. The system of Claim 12, the processor further arranged to repeat steps e to h to reduce the size of the identified further subset.

14. The system of any of Claims 12 to 13, wherein the number of receivers in each subset and/or further subset is substantially equal across the subsets.

15. The system of any of Claims 12 to 14, wherein identifying the content item comprises receiving information identifying the content item over a communication network.
